# EUROPEAN PATENT APPLICATION

(11) **EP 1 180 463 A1**
(43) Date of publication of application: **20.02.2002**
(21) Application number: 00670008.2
(22) Date of filing: 07.08.2000
(51) Int. Cl.: B62B 3/02, B62B 5/00

(54) **Shopping trolley**

(71) Applicant: Plasfil - Plasticos da Figueira, Lda., 3081-852 Figueira da Foz Codex (PT)
(72) Inventor: Guedes da Silva, José, 3080-189 Figueira da Foz (PT)
(74) Representative: Pereira da Cruz, Joao

(57) **Abstract**

The present invention relates to a shopping trolley which can be carried in the boot of a motor vehicle. More specifically, it refers to a personal shopping trolley regarding which the user does not have to make any effort when placing the trolley inside the motor vehicle. It is also possible to collapse the basket (when it is empty), meaning that the trolley will take up much less space inside the motor vehicle. It consists essentially of a basket (1) and a structure (2) which are collapsible using hinges and axles situated in the walls of the basket (3 and 4) and in the components of the structure (5, 7 and 9), so that the trolley can be stored in a dismantled and compact position.

## Description

The present invention relates to a shopping trolley which can be carried in the boot of a motor vehicle. More specifically, it refers to a personal shopping trolley regarding which the user does not have to make any effort when placing the trolley inside the motor vehicle. It is also possible to collapse the basket (when it is empty), meaning that the trolley will take up much less space inside the motor vehicle.

### Background to the invention

Shopping trolleys are widely known. In fact, they exist in all supermarkets and hypermarkets. However, these types of trolleys belong to the retailers. In order to use them a small deposit is normally required (generally a coin), which is returned after use. This means that it is first of all necessary to find a trolley (which is not always easy), a coin is required to free the trolley and although it can be taken to the vehicle, the goods that have been purchased have to be unloaded, bag by bag, and finally the trolley has to be taken back to the correct place, where the coin is returned. In fact, there are many operations which hinder the use of trolleys of this kind.

However, there are some trolleys for personal use belonging to prior art which make it possible to load the merchandise acquired into a motor vehicle.

These include the trolley described in the patent EP 0849140 relating to a trolley intended to be used inside commercial establishments, which can be loaded without any effort into the boot of a motor vehicle even when it is full. The trolley consists of a basket (11) and a support on casters. The support on casters is placed in the boot of the vehicle after being removed from the longitudinal bars (16) on which the casters and the bars (6) which support the basket rest. The basket can move relative to its supports and it rotates by means of rods (14) which constitute two deformable parallelograms. The control means (9), which can be electric or a lever, transmit synchronous movement to two reducer gears situated at either side of the basket at (12). Thus, the basket can be placed inside or removed from the boot of the vehicle without any effort by transposing the respective entrance.

Document US 4251178 relates to a cart for use in transporting and demonstrating business machines and other similar devices, which consists of a wheel section and a handle section each having spaced apart pairs of frame elements which form guiding tracks, along which a trolley suitable for mounting a business machine can travel between a transport position in which the trolley lies adjacent to the lower end of the wheel section and a demonstration position adjacent to the upper end of the handle section which is curved, in order to allow the upper end of the handle section to rest on top of a desk, the handle section mounting assist elastic means in the form of a spiral spring the end of which is functionally connected to the trolley, in order to counterbalance the weight of the business machine when the car is moved from one position to another, the trolley having a detachable support leg which, in its position of use, converts the trolley into a free-standing demonstration stand, the trolley also being provided with an accessory for attaching it to the boot of a motor vehicle, the attachment comprising a track-forming frame extension adapted to be connected to the upper end of the handle section and a base plate adapted to be positioned inside the boot, the base plate being mounted on an adjustable support which pivotally receives the frame extension, the frame extension being pivotal about the support in order to deposit the trolley inside the boot, whereupon the frame extension is detached from the rest of the trolley and lowered onto the base plate.

Document US 4941797 relates to a mechanically-operated lifting and presenting mechanism with a base structure that is placed on the floor of the boot of a car. A trolley moves between an elevated position and a lowered, transport position when a lift assembly causes the trolley and base structure to be separated and brought close together. The lift assembly is selectively operated by a reversible electric motor, in order to expand to separate the trolley from the base structure and to contract to bring the trolley and base structure closer together. The trolley has a guiding track and a track follower, and a platform mounted on the track follower, so that the platform can move to and fro along the track. The platform is capable of supporting heavy and bulky articles. When the trolley is in an elevated position, the platform can move along the track between a retracted position in which the platform is generally situated over the base structure and inside the car boot, and a presenting position in which the platform extends out from over the boot, generally out of the boot. A covering is provided for protecting the lift assembly without impeding its capacity to expand and contract vertically.

However, all these trolleys have various inconveniences, in particular their complexity and the need for a considerable amount of space inside the boot of the vehicle. Furthermore, they are operated by levers or even electric motors.

### Summary of the invention

The present invention resolves or minimises all the inconveniences mentioned above. In fact, it is a personal shopping trolley which can be taken right up to the vehicle and allows the merchandise acquired or the actual trolley itself to be placed inside the vehicle without any effort and it is collapsible in order to take up a small amount of space. Furthermore, it is extremely simple to operate, its structure is not complex and it is aesthetically pleasing to the eye.

It consists essentially of a non-detachable basket and a structure which provides support and movement. Said basket consists of collapsible walls which can retract inside the basket. The structure which provides support and movement consists of two horizontal arms with casters on their lower part, two vertical arms with guiding tracks which guide the retracting movement of the horizontal arms and two independent guiding tracks placed laterally inside the basket, which guide the vertical arms.

These and other characteristics of the invention can be understood more clearly from the following description, which shows all the advantages of this new trolley.

### Brief description of the drawings

The drawings, which are attached hereto for exemplifying and non-restrictive purposes, illustrate the following:

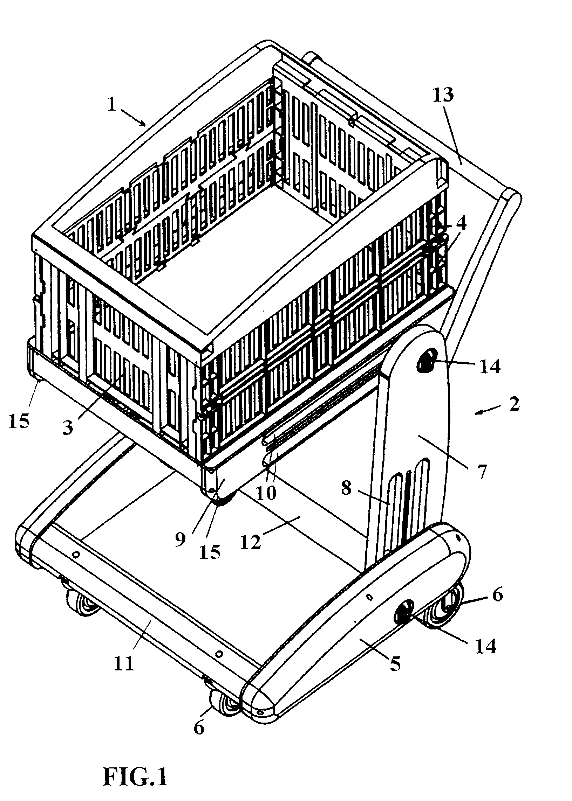

Figure 1 shows a perspective view of the trolley in an open position and in its position of use;

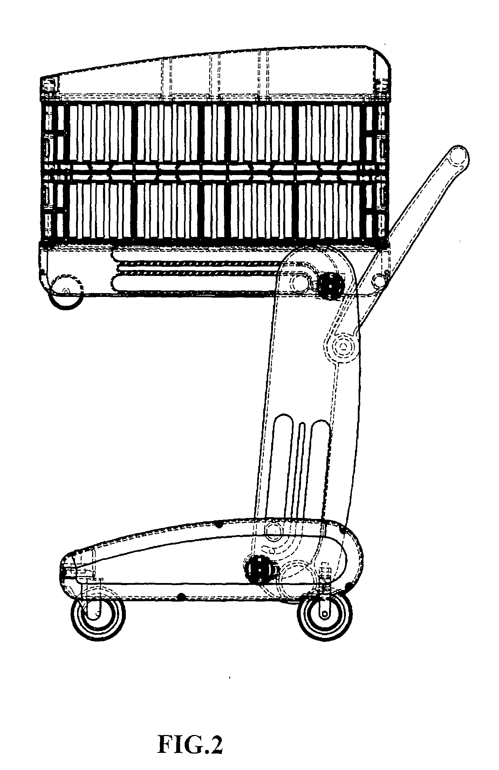

Figure 2 shows a side elevation of the same trolley in its position of use;

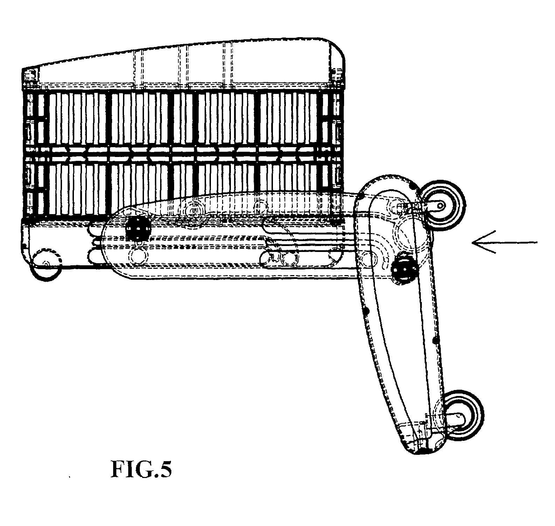

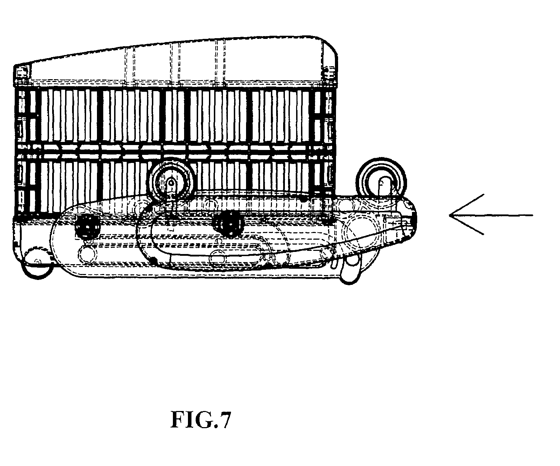

Figures 3 to 7 show side elevations of the trolley at the various stages of the collapsing of the structure;

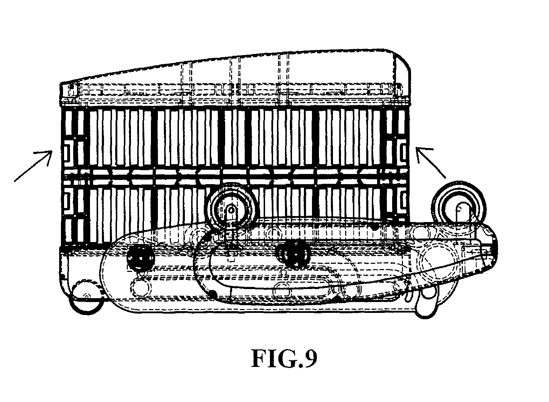

Figures 8 to 11 show perspective views and side elevations of the trolley at the various stages of the collapsing of the basket.

### Detailed description of the preferred embodiment

As shown in the drawings, the trolley of the invention consists essentially of a non-detachable basket (1) and a structure (2) which provides support and movement. Said basket (1) consists of collapsible walls (3) and (4), the largest ones (4) being divided into a lower part and an upper part, said walls being able to retract inside the actual basket (1). The frame (2) which provides support and movement consists of two horizontal arms (5) with casters (6) on the lower part, two vertical arms (7) with guiding tracks (8) which guide the retracting movement of the horizontal arms (5) and support bars (9) with two separate guiding tracks (10) which are placed laterally inside the basket and which guide the vertical arms (7). The structure (2) also has a crossbar (11) which joins said horizontal arms (5) at the front of the trolley, a connecting shaft (12) between said horizontal arms (5) at the back of the trolley and a guide bar (13) with arms which are connected to the structure. The horizontal and vertical arms of the structure slide by means of rotating buttons (14) and guiding pins (16).

The process for placing the shopping trolley of the invention inside a motor vehicle is as follows:

### Phase 1 - Initial stage of the collapsing process.

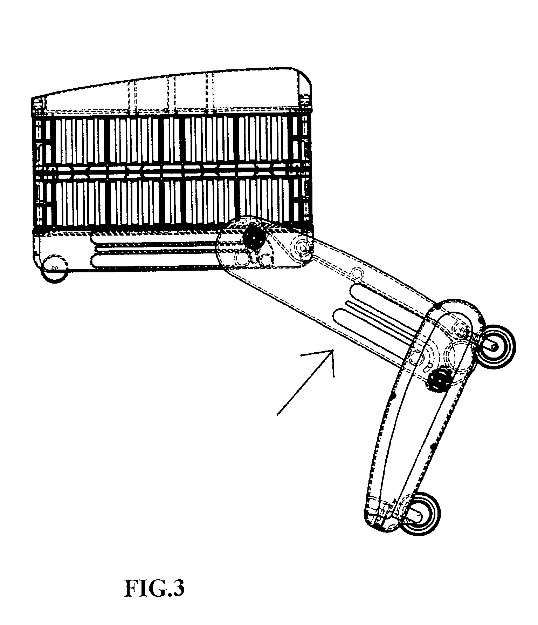

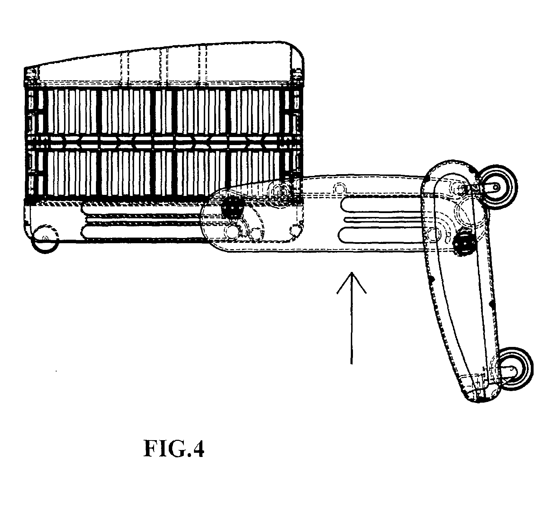

Approximately two thirds of the length of the shopping trolley is placed inside the boot of a motor vehicle. For this purpose, it is simply necessary to place the front part of the trolley on the floor of the boot and slide the basket inside using the wheels (15). The buttons (14) which lock the structure are then rotated to a position in which they can slide on the guiding tracks in order to begin the process for collapsing the horizontal (5) and vertical (7) arms. The arms of the guide bar (13) are also slotted inside sockets formed inside the vertical arms (7) by means of rotation and collapsing. The user, when lifting the lower shaft (12), guides the horizontal (5) and vertical (7) arms respectively using the guiding tracks (8) and (10) (figures 3 and 4).

### Phase 2 - Closing of the horizontal and vertical arms.

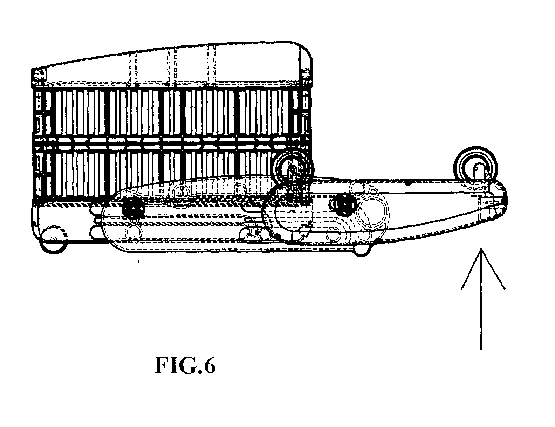

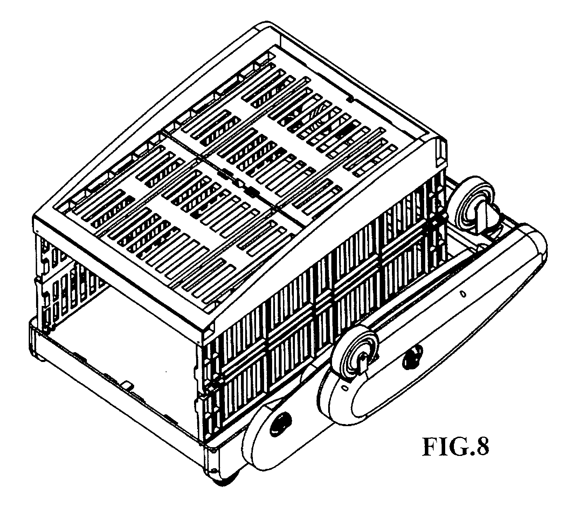

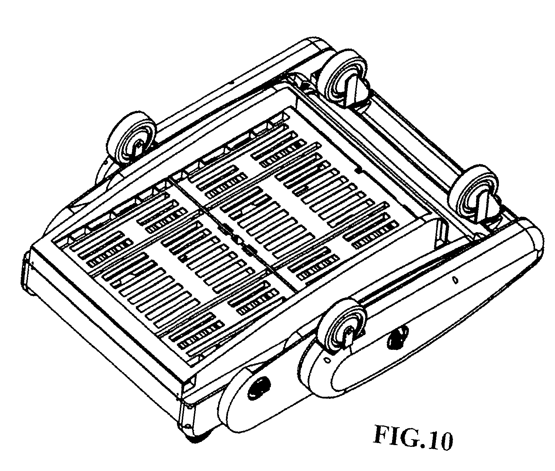

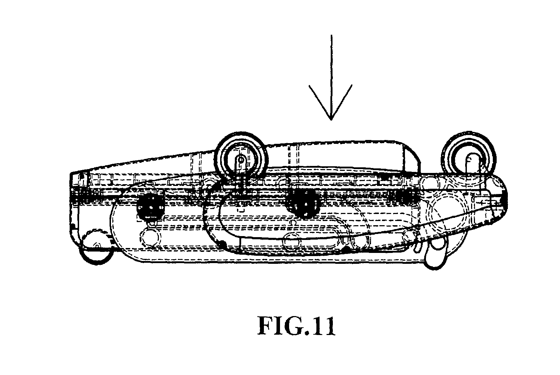

With the help of the lower shaft (12), the vertical arms (7) are raised (figure 4) and when they are parallel to the base of the basket (1) (figure 6), the whole structure is moved in the direction of the arrow (figure 8). The horizontal arms (5) are then raised, as shown in figure 10, and when they are parallel to the other elements they move in the direction of the arrow (figure 12) using the guiding tracks (10), until they reach a final position identical to that which is shown in figures 11 and 12. At this point the structure is totally collapsed.

Both the horizontal (5) and the vertical (7) arms have guiding pins (16) which move along the guiding tracks of the vertical arms (7) and the support bars (9) respectively of the basket (1). These pins (16) facilitate and reinforce the guiding action.

### Phase 3 - Closing of the basket.

In order to close and collapse the basket (1), first of all the smaller side walls (3) are raised, said walls rotating about articulations along their upper edges. The side walls (4) are then collapsed by means of articulations situated along the upper, lower and middle edges of said walls (4). These walls initially collapse by articulating along the middle edges and the upper and lower edges, folding inwards in order to form a "V" shape until the two parts of said walls (4), the upper and the lower parts, are stacked one on top of the other. The trolley is then in a totally closed position, as shown in figures 15 and 16.

Obviously, if the trolley is full of shopping, it is neither advisable nor possible to collapse and close the basket. The whole process is followed until the basket is in an assembled position inside the boot of the motor vehicle.

In order to assemble the basket and/or the structure, the various phases described above are followed but in reverse order.

As can be understood from the description and drawings referred to above, all the operations for closing and/or opening the basket or the structure are extremely simple and no complex movement is required, nor does any particular pressure need to be applied to the moveable parts. The movements are made with great ease.

As will be obvious to persons skilled in the art, alterations can be made to the details of the composition and functioning described above. All these alterations must be considered to fall within the scope of the invention, which must only be limited by the following claims.

## Claims

1. Shopping trolley of the type that can be stored in the boot of a motor vehicle, comprising a basket and a support structure, **characterised in that** said basket is joined to the support structure, both the basket and the structure being collapsible by means of hinges and axles situated in the walls of the basket and in the components of the structure, so that the trolley can be stored in a dismantled and compact position.

2. Shopping trolley according to claim 1, **characterised in that** said structure consists of two horizontal arms (5) with four casters (6) on their lower part placed at the end of the arms, these arms being joined together by means of a front crossbar (11) and a back connecting shaft (12), two vertical arms (7) with guiding tracks (8), two vertical support bars (9) which are attached to the side walls (4) of the basket and which have guiding tracks (10), and a guide bar (13) with arms attaching it to the structure.

3. Shopping trolley according to claim 1, **characterised in that** the movement of the horizontal arms (5) and the vertical arms (7) along the guiding tracks (8) and (10) respectively is made by means of guiding pins (16) which are fixed to said horizontal (5) and vertical (7) arms and which slide along said guiding tracks (8) and (10) by unlocking the rotating buttons (14).

4. Shopping trolley according to claim 1, **characterised in that** the basket, which is joined to the structure (2) by means of the support bars (9) has smaller side walls (3) which have an articulation along their upper edges in order to allow said walls (3) to collapse until they reach a horizontal position and **in that** the larger walls (4) are divided into an upper part and a lower part, have articulations along their upper, lower and middle edges, so that they can collapse by rotating into the basket about the middle, upper and lower edges in order to form a "V" shape until the two component parts of the walls are stacked one on top of the other.

5. Shopping trolley according to claims 1 to 4, **characterised in that** it can be placed inside the boot of a motor vehicle in accordance with the following steps:
a) approximately two thirds of the basket (1) is placed inside the boot with the help of the two wheels (15) situated at the front of the basket (1); and
b) when said wheels (15) are resting correctly, the structure is retracted using the connecting shaft (12) which causes both the horizontal arms (5) and the vertical arms (7) to move along the guiding tracks (8) and (10) respectively, and the arms of the guide bar (13) to slot inside the vertical arms (7) in order to collapse and fold away the whole structure underneath the basket (1) so as to obtain a compact arrangement.

6. Shopping trolley according to claims 1 to 5, **characterised in that** the structure is assembled by following the collapsing process in reverse order.
